# EUROPÄISCHE PATENTSCHRIFT

(11) **EP 3 176 461 B1**
(45) Veröffentlichungstag und Bekanntmachung des Hinweises auf die Patenterteilung: **20.03.2019**
(21) Anmeldenummer: 15197712.1
(22) Anmeldetag: 03.12.2015
(51) Int. Cl.: F16F 1/38

(54) **VORRICHTUNG ZUR AUFNAHME UND POSITIONIERUNG EINES GETRIEBES UND VERWENDUNG DER VORRICHTUNG**
A DEVICE FOR RECEIVING AND POSITIONING A TRANSMISSION AND USE OF THE DEVICE
DISPOSITIF DE RECEPTION ET DE POSITIONNEMENT D'UN ENGRENAGE ET UTILISATION DU DISPOSITIF

(43) Veröffentlichungstag der Anmeldung: 07.06.2017
(73) Patentinhaber: Nordex Energy GmbH, 22419 Hamburg (DE)
(72) Erfinder: Muhamad, Ibrahim, 18057 Rostock (DE); Hanke, Andreas, 18055 Rostock (DE)
(74) Vertreter: Garrels, Sabine

(56) Entgegenhaltungen:
- WO-A1-2011/085773
- WO-A1-2014/092630
- DE-A1-102012 005 845

## Beschreibung

Die erfindungsgemäße Vorrichtung zur Aufnahme und Positionierung eines Getriebes ist insbesondere für den Einsatz in Getriebeauflagern vorgesehen, die mit elastischen Mitteln ausgestattet sind. Derartige Getriebeauflager, die große durch Bewegungen und/oder Schwingungen erzeugte Kräfte aufnehmen und ausgleichen müssen sind bevorzugt für den Einbau in Windenergieanlagen geeignet. Die Anwendung wird hier beispielhaft für Getriebe von Windenergieanlagen beschrieben, kann aber immer dort angewendet werden, wo die oben beschriebenen Kräfte entstehen.

An die Getriebeauflager von Windenergieanlagen werden besondere Anforderungen gestellt. Die Getriebeauflager müssen durch Unregelmäßigkeiten des Windes hinsichtlich seiner Stärke und Richtung hohen und unterschiedlich gerichteten Kräften standhalten. Die in Zug-, Druck- und Querrichtung wirkenden Kräfte sind umso größer, je stärker die Windkraft und je größer die Windenergieanlage ist. Die Bauteile der Windenergieanlagen, insbesondere deren Getriebeauflager müssen Beanspruchungen durch die besagten Kräfte über eine lange Betriebszeit unbeschädigt aushalten und diese nach Möglichkeit neutralisieren bzw. ausgleichen. Darüber hinaus müssen die Getriebeauflager die durch die einwirkenden Kräfte bedingten und durch Schwingungen der Anlage erzeugten Geräusche abschwächen.

Bei einer typischen Getriebelagerung ist der Getriebeblock mittels Drehmomentstützen beidseitig des Getriebeblocks mit dem Maschinenträger der Windenergieanlage verbunden. Die Drehmomentstützen weisen an ihren Enden Bohrungen auf, durch die jeweils eine Achse geführt ist. Es ist möglich die Achsen direkt durch die Bohrung der jeweiligen Drehmomentstütze zu führen bzw. zunächst eine Spannbuchse in der Bohrung zu platzieren und die Achse im Auge der Spannbuchse zu lagern.

Die Achse ist wiederum an zwei Ständern befestigt, die sich zu beiden Seiten der Drehmomentstütze befinden und mit dem Maschinenträger der Windenergieanlage verbunden sind. Dabei werden nach dem Stand der Technik nicht geteilte Vollbuchsen in die mit entsprechenden Bohrungen (Augen) versehenen Ständer axial eingepresst oder auch in Form von geteilten Buchsen in horizontal geteilten Ständern verspannt.

Die Erfindung in WO 2011/085773 A1 beschreibt eine Spannbuchse, die aufgrund ihrer besonderen exzentrischen Geometrie und der verwendeten Verbundmaterialien zur Reduzierung von Schwingungen und Körperschall vorzugsweise in Drehmomentstützen von Getrieben, insbesondere in Windkraftanlagen, geeignet ist. Die Anordnung von Blechen und Elastomeren in einzelnen Segmenten sowie die exzentrische bzw. rotationsunsymmetrische Geometrie der Spannbuchse im entspannten als auch im vorgespannten Zustand bewirkt, dass insbesondere vertikale Schwingungen gedämpft werden.

EP 1046832 A1 beschreibt eine radial verspannbare, im gespannten Zustand rotationssymmetrische zylindrische Spannbuchse, welche aus einer unteren und einer oberen zylindrische Halbschale besteht. Jede Halbschale ist zusammengesetzt aus einer äußeren Halbbuchse und einer inneren Halbbuchse, wobei die Zwischenräume zwischen den besagten Buchsen weitestgehend mit Elastomermaterial von gleich oder verschieden dicken Schichten in der Art ausgefüllt sind, dass sie bzw. die aus ihnen gebildete Spannbuchse im ungespannten Zustand exzentrisch, aber nach Vorspannung konzentrisch bzw. rotationssymmetrisch sind/ist.

Derzeit werden bei horizontal geteilten Ständern (zwei Klemmhälften) Distanzstücke zur Fixierung der Elastomerhalbschalen eingesetzt. Je Windenergieanlage werden acht Distanzstücke verbaut, wobei je nach Einbauposition zwei unterschiedliche Bauformen zum Einsatz kommen. Nachteilig bei dieser Lösung ist, dass die Distanzstücke unabhängig von den Ständern bestellt werden müssen und auf Grund ihrer Toleranzen relativ kostenintensiv sind. Des Weiteren ergeben sich durch den Einsatz von Distanzstücken zwangsläufig zwei weitere Trennfugen, welche berechnungstechnisch nachteilig sind. Der Einsatz der Distanzstücke erfordert des Weiteren eine erhöhte Maßhaltigkeit der Elastomerhalbschalen, da sich das Toleranzfeld aus der Summe der beiden Elastomerhalbschalen, des Distanzstückes und der jeweiligen reibwerterhöhenden Beschichtung der Trennfuge summiert. Die Haltefunktion der Distanzstücke, die durch eine im Distanzstück eingefräste Nut entsteht, weist ebenfalls eine erhöhte Spannungskonzentration auf. Ebenfalls ist die notwendige Materialstärke der Distanzstücke für den Einsatz in kalten Regionen nachteilig.

Weitere Lösungen einer Lagerung im Fahrzeugbereich werden in DE 102012005845 A1 und WO 2014/092630 A1 offenbart und zeigen im allgemeinen Maschinenbau bekannte Konstruktionsmethoden, wie die Kombination unterschiedlicher Werkstoffe (Metall, Gummi, Elastomer), die Kombination von schwingungsdämpfenden Materialien mit unterschiedlichen Härtegraden, die Integration von Hohlräumen im Dämpfungsmaterial (für einen zunächst weichen "Federweg") und die Integration von mechanischen Anschlägen (um den "Federweg" zu begrenzen).

### Darstellung der Erfindung

Die Aufgabe besteht darin, eine Vorrichtung zur Aufnahme und Positionierung eines Getriebes zu entwickeln, welche eine verbesserte Dämpfung bzw. Körperschallentkopplung in vertikaler Richtung erreicht, und gleichzeitig eine vereinfachte Montage sowie eine verbesserte Haltefunktion und Positionierung ermöglicht.

Die Aufgabe wird durch die erfindungsgemäße Lösung, wie sie in den Ansprüchen und im Folgenden näher beschrieben wird, gelöst.

Die erfindungsgemäße Vorrichtung zur Aufnahme und Positionierung eines Getriebes besteht aus zwei Klemmhälften, die aufeinander liegend einen Ständer bilden. Für eine Aufnahme einer aus zwei Elastomerhalbschalen zusammengesetzten Spannbuchse ist in jeder der Klemmhälften in axialer Richtung eine Ausnehmung vorgesehen. Dazu weist jede der Klemmhälften jeweils zwei angeformte seitliche Schenkel auf, so dass beim Zusammenfügen der Klemmhälften die Schenkel der ersten Klemmhälfte und die Schenkel der zweiten Klemmhälfte aufeinander stoßen. Dadurch ergibt sich ein im Querschnitt oval oder bogenförmig-rechteckig geformter axialer Raum, welcher der Aufnahme der aus den Elastomerhalbschalen zusammengesetzten Spannbuchse dient. Die seitlichen, aufeinander stoßenden Schenkel haben zusammen ein Höhenmaß d. Die Ausnehmungen weisen die Form eines Kreisbogens mit einem Querschnitts-Durchmesser a auf, wobei der Kreisbogen mit dem Querschnitts-Durchmesser a um ein Maß c über seine Mittelachse bis in die seitlichen Schenkel hinein gezogen ist, so dass ein innerer Abstand b der jeweils zwei Schenkel einer Klemmhälfte kleiner ist als der Querschnitts-Durchmesser a.

In einer Ausführungsform ist jede Elastomerhalbschale mit der jeweiligen Klemmhälfte kraftschlüssig und formschlüssig verbunden.

Erfindungsgemäß wird die Vorrichtung zur Aufnahme von durch Bewegung oder Schwingungen erzeugten Kräften verwendet. Bevorzugt wird die Vorrichtung in Maschinenauflagern und besonders bevorzugt als Getriebeauflager verwendet.

Durch eine spezielle Geometrie der einzelnen Klemmhälften des Ständers wird die Haltefunktion und Positionierung der Elastomerhalbschalen vollständig von den Klemmhälften übernommen, sodass die Distanzstücke komplett entfallen können.

### Ausführung der Erfindung

Die Erfindung wird anhand von Zeichnungen näher erläutert. Hierzu zeigt
Figur 1 einen horizontal geteilten Ständer mit zwei Klemmhälften und zwei Distanzstücken sowie einer geteilten Spannbuchse (Elastomerhalbschalen), entsprechend des Stands der Technik,
Figur 2 eine vergrößerte Darstellung des Details "A" aus Figur 1,
Figur 3 die erfindungsgemäße Vorrichtung, bestehend aus einem horizontal geteilten Ständer mit zwei Klemmhälften ohne Distanzstücke sowie einer geteilten Spannbuchse (Elastomerhalbschalen) und
Figur 4 eine vergrößerte Darstellung des Details "B" aus Figur 3.

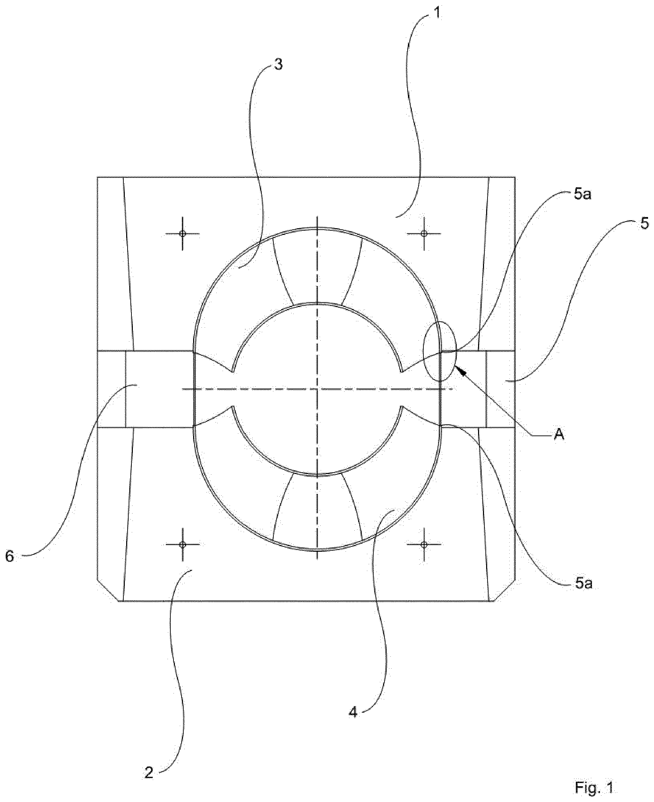

Der in Figur 1 dargestellte Stand der Technik zeigt einen Ständer, bestehend aus zwei aufeinander liegenden, im Wesentlichen quaderförmigen Klemmhälften 1 und 2, wobei der Innenraum der durch die zusammengefügten Klemmhälften gebildet wird, als Vollschale angesehen wird. In der Vollschale sind Elastomerhalbschalen 3 und 4 integriert, welche eine Spannbuchse mit einer bevorzugt ovalen oder ellipsoiden Längsschnittkontur innerhalb der Vollschale bilden und deren Längsachse im Betriebszustand vorzugsweise vertikal ausgerichtet ist. Die Elastomerhalbschalen 3 und 4 weisen die entsprechenden Halbformen auf. Die Außenkontur der Spannbuchse kann ebenso runde Elemente oben und unten aufweisen. Zwischen der ersten Klemmhälfte 1 und der zweiten Klemmhälfte 2 sind axial an den Außenkanten zwei Distanzstücke 5 und 6 angeordnet. Die Elastomerhalbschalen 3 und 4 werden innerhalb der Klemmhälften 1 und 2 fixiert.

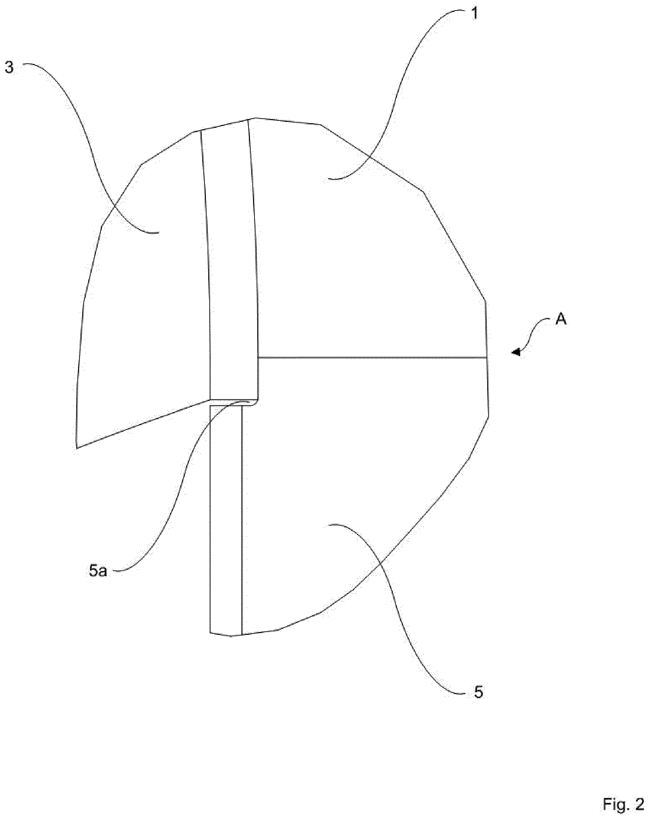

In Figur 2 ist das Detail "A" aus Figur 1 vergrößert dargestellt. Hier ist beispielhaft das Distanzstück 5 und die Elastomerhalbschale 3 zu sehen. Das Distanzstück 6 und die Elastomerhalbschale 4 sind äquivalent gestaltet. Das Distanzstück 5 weist einen Absatz 5a auf, welcher in den Innenraum des Ständers hineinragt. Die Elastomerhalbschale 3 liegt auf diesem Absatz 5a auf und wird dadurch innerhalb der Klemmhälfte 1 fixiert.

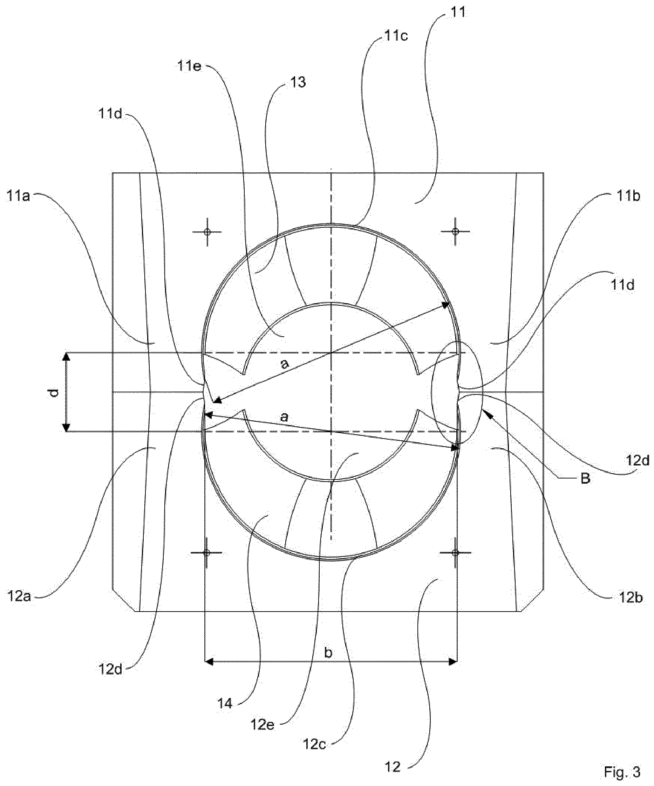

Die erfindungsgemäße Vorrichtung zur Aufnahme und Positionierung eines Getriebes wird in Figur 3 gezeigt. Auch hier sind zwei Klemmhälften 11 und 12, eine untere und eine obere, mit integrierten Elastomerhalbschalen 13 und 14 aufeinander liegend angeordnet. Die Elastomerhalbschalen 13 und 14 bestehen aus einem elastisch verformbaren Kunststoff und bilden zusammengesetzt eine Spannbuchse. Die zusammengefügten Klemmhälften 11 und 12 sind im Wesentlichen quaderförmig und bilden zusammen einen Ständer. Es sind aber auch andere äußere Formen des Ständers denkbar. Die Klemmhälften 11 und 12 sind in diesem Ausführungsbeispiel bevorzugt symmetrisch. Es sind auch nicht symmetrische Formen denkbar.

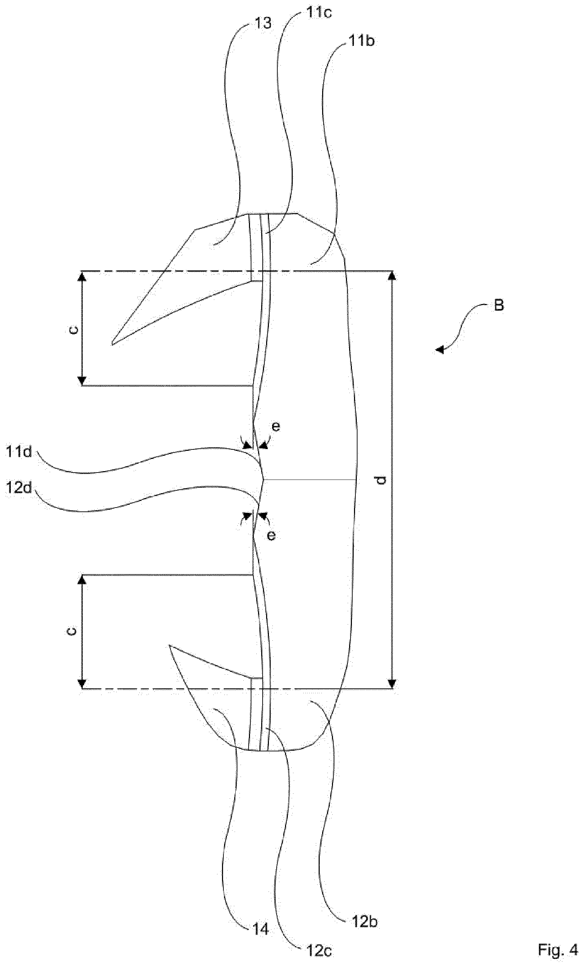

Die erste Klemmhälfte 11 hat in axialer Richtung eine Ausnehmung 11e mit einem Querschnitts-Durchmesser a für die Aufnahme der Elastomerhalbschale 13 und jeweils zwei angeformte seitliche Schenkel 11a und 11b. Die zweite Klemmhälfte 12 hat in axialer Richtung eine Ausnehmung 12e mit einem Querschnitts-Durchmesser a für die Aufnahme der Elastomerhalbschale 14 und jeweils zwei angeformte seitliche Schenkel 12a und 12b. Beim Zusammenfügen der ersten Klemmhälfte 11 und der zweiten Klemmhälfte 12 stoßen die Schenkel 11a und 11b der ersten Klemmhälfte 11 und die Schenkel 12a und 12b der zweiten Klemmhälfte 12 aufeinander. Die Länge eines jeden Schenkels 11a, 11b, 12a und 12b beträgt ein halbes Höhenmaß d/2, wobei die Höhe d der Höhe eines Distanzstücks 5 und 6 in Figur 1 entspricht. Dadurch wird der Abstand zwischen den Klemmhälften 11 und 12 überbrückt, welcher vormals durch die Distanzstücke ausgeglichen wurde. Es entsteht ein im Querschnitt oval oder bogenförmig-rechteckig geformter axialer Raum, in welchem die Elastomerhalbschalen 13 und 14 angeordnet sind. Die Elastomerhalbschalen 13 und 14 sind so geformt, dass beim Zusammenfügen der beiden Teile eine Spannbuchse mit einem zylindrisch geformten Hohlraum für die Aufnahme einer nicht dargestellten Achse entsteht, die durch die seitliche Drehmomentstütze des Getriebes geführt ist. Der Kreisbogen mit dem Querschnitts-Durchmesser a der halbzylinderförmigen Ausnehmungen 11e und 12e der Klemmhälften 11 und 12 wird um das Maß c (siehe Figur 4) über seine Mittelachse bis in die seitlichen Schenkel 11a und 11b sowie 12a und 12b hinein gezogen, so dass der innere Abstand b der beiden Schenkel 11a und 11b der Klemmhälfte 11 sowie der beiden Schenkel 12a und 12b der Klemmhälfte 12 kleiner ist als der Querschnitts-Durchmesser a. Das Maß c ist kleiner als das halbe Höhenmaß d/2. Der innere Abstand b ist kleiner als der Außendurchmesser der Spannbuchse. Die seitlichen Schenkel 11a und 11b sowie 12a und 12b sind dadurch um das Maß a-b in den Innenraum gezogen. Dadurch wird die jeweilige Elastomerhalbschale 13 und 14 umschlossen. Die Elastomerhalbschalen 13 bzw. 14 werden in die jeweilige Klemmhälfte 11 bzw. 12 gedrückt und rasten dort ein. Zur Erleichterung des Eindrückens der Elastomerhalbschalen 13 bzw. 14 in radialer Richtung sind die Klemmhälften 11 bzw. 12 an der unteren inneren Seite der Schenkel 11a und 11b sowie 12a und 12b jeweils mit einer flachen Fase 11d und 12d versehen. Zur Erleichterung des Eindrückens der Elastomerhalbschalen 13 bzw. 14 in axialer Richtung sind die Klemmhälften 11 und 12 mit einer flachen Fase 11c und 12c versehen. Dadurch können die Elastomerhalbschalen 13 bzw. 14 bei bereits montierten Klemmhälften 11 und 12 axial in diese eingedrückt werden.

Durch die Ausgestaltung der erfindungsgemäßen Vorrichtung wird sichergestellt, dass die Elastomerhalbschalen 13 und 14 in ihrer Position fixiert werden und dass das Anschmiegeverhalten der Elastomerhalbschalen 13 und 14 an die jeweilige Klemmhälfte 11 bzw. 12 verbessert wird.

## Patentansprüche

1. Vorrichtung zur Aufnahme und Positionierung eines Getriebes, welche aus einer ersten Klemmhälfte (11) und einer zweiten Klemmhälfte (12) besteht, die zusammengefügt einen Ständer bilden, wobei für eine Aufnahme einer aus zwei Elastomerhalbschalen (13, 14) zusammengesetzten Spannbuchse in jeder der Klemmhälften (11, 12) in axialer Richtung eine Ausnehmung (11e, 12e) vorgesehen ist, und jede der Klemmhälften (11, 12) jeweils zwei angeformte seitliche Schenkel (11a, 11b, 12a, 12b) aufweist, so dass beim Zusammenfügen der Klemmhälften (11, 12) die Schenkel (11a, 11b) der ersten Klemmhälfte (11) und die Schenkel (12a, 12b) der zweiten Klemmhälfte (12) aufeinander stoßen und dadurch einen im Querschnitt oval oder bogenförmig-rechteckig geformten axialen Raum ergeben, welcher der Aufnahme der aus den Elastomerhalbschalen (13, 14) zusammengesetzten Spannbuchse dient, **dadurch gekennzeichnet, dass** die Ausnehmungen (11e, 12e) die Form eines Kreisbogens mit einem Querschnitts-Durchmesser a aufweisen, wobei der Kreisbogen mit dem Querschnitts-Durchmesser a um ein Maß c über seine Mittelachse bis in die seitlichen Schenkel (11a, 11b, 12a, 12b) hinein gezogen ist, so dass ein innerer Abstand b der jeweils zwei Schenkel (11a, 11b, 12a, 12b) einer Klemmhälfte (11, 12) kleiner ist als der Querschnitts-Durchmesser a.

2. Vorrichtung nach Anspruch 1 **dadurch gekennzeichnet, dass** die seitlichen, aufeinander stoßenden Schenkel (11a, 11b) sowie (12a, 12b) jeweils zusammen eine Höhe d haben.

3. Vorrichtung nach Anspruch 1 **dadurch gekennzeichnet, dass** jede Elastomerhalbschale (13, 14) mit der jeweiligen Klemmhälfte (11, 12) kraftschlüssig und formschlüssig verbunden ist.

4. Verwendung der Vorrichtung gemäß der Ansprüche 1 bis 3 zur Aufnahme von durch Bewegung oder Schwingungen erzeugten Kräften.

5. Verwendung der Vorrichtung nach Anspruch 4 in Maschinenauflagern.

6. Verwendung der Vorrichtung nach Anspruch 5 als Getriebeauflager für Windenergieanlagen.

## Claims

1. Device for receiving and positioning a gearbox, which device comprises a first clamping half (11) and a second clamping half (12) which, when joined together, form a stand, wherein, in order to receive a clamping bush composed of two elastomer half-shells (13, 14), a recess (11e, 12e) is provided in each of the clamping halves (11, 12) in the axial direction, and each of the clamping halves (11, 12) respectively has two integrally formed lateral legs (11a, 11b, 12a, 12b), with the result that, when joining together the clamping halves (11, 12), the legs (11a, 11b) of the first clamping half (11) and the legs (12a, 12b) of the second clamping half (12) abut and thereby produce an axial space which, in cross section, has an oval or arcuate-rectangular shape and which serves to receive the clamping bush composed of the elastomer half-shells (13, 14), **characterized in that** the recesses (11e, 12e) have the shape of a circular arc with a cross-section diameter a, wherein the circular arc with the cross-section diameter a is drawn by a dimension c over its centre axis into the lateral legs (11a, 11b, 12a, 12b), with the result that an inner spacing b of the respective two legs (11a, 11b, 12a, 12b) of a clamping half (11, 12) is less than the cross-section diameter a.

2. Device according to Claim 1, **characterized in that** the lateral, abutting legs (11a, 11b) and (12a, 12b) each together have a height d.

3. Device according to Claim 1, **characterized in that** each elastomer half-shell (13, 14) is connected to the respective clamping half (11, 12) in a force-fitting and form-fitting manner.

4. Use of the device according to Claims 1 to 3 for taking up forces generated by movement or vibrations.

5. Use of the device according to Claim 4 in machine supports.

6. Use of the device according to Claim 5 as gearbox support for wind turbines.

## Revendications

1. Dispositif pour recevoir et positionner un engrenage, qui se compose d'une première moitié de serrage (11) et d'une deuxième moitié de serrage (12) qui, lorsqu'elles sont assemblées, forment un support, un évidement (11e, 12e) étant prévu dans chacune des moitiés de serrage (11, 12) dans la direction axiale pour recevoir une douille de serrage composée de deux demi-coques en élastomère (13, 14) et chacune des moitiés de serrage (11, 12) présentant dans chaque cas deux branches latérales façonnées (11a, 11b, 12a, 12b), de telle sorte que lors de l'assemblage des moitiés de serrage (11, 12), les branches (11a, 11b) de la première moitié de serrage (11) et les branches (12a, 12b) de la deuxième moitié de serrage (12) viennent en butée l'une contre l'autre et qu'il en résulte de ce fait un espace axial de section transversale de forme ovale ou rectangulaire courbe, qui sert à recevoir la douille de serrage composée des demi-coques en élastomère (13, 14), **caractérisé en ce que** les évidements (11e, 12e) présentent la forme d'un arc de cercle ayant un diamètre en section transversale a, l'arc de cercle ayant le diamètre en section transversale a étant prolongé d'une dimension c au-delà de son axe médian jusque dans les branches latérales (11a, 11b, 12a, 12b) vers l'intérieur de telle sorte qu'une distance intérieure b des deux branches respectives (11a, 11b, 12a, 12b) d'une moitié de serrage (11, 12) soit inférieure au diamètre en section transversale a.

2. Dispositif selon la revendication 1, **caractérisé en ce que** les branches latérales en butée l'une contre l'autre (11a, 11b) ainsi que (12a, 12b) présentent à chaque fois ensemble une hauteur d.

3. Dispositif selon la revendication 1, **caractérisé en ce que** chaque demi-coque en élastomère (13, 14) est connectée à la moitié de serrage respective (11, 12) par engagement par force et par correspondance de formes.

4. Utilisation du dispositif selon les revendications 1 à 3, pour recevoir des forces générées par déplacement ou par oscillations.

5. Utilisation du dispositif selon la revendication 4 dans des supports de machine.

6. Utilisation du dispositif selon la revendication 5 en tant que support d'engrenage pour des installations éoliennes.
